# EUROPEAN PATENT APPLICATION

(11) **EP 4 804 511 A1**
(43) Date of publication of application: **09.09.2026**
(21) Application number: 25305304.5
(22) Date of filing: 07.03.2025
(51) Int. Cl.: H04N 1/60, G06T 5/90, H04N 9/64

(54) **TWO STAGES DYNAMIC GAMUT MAPPING AVOIDING COLOR ARTEFACTS**

(71) Applicant: InterDigital CE Patent Holdings, SAS, 75017 Paris (FR)
(72) Inventor: MORVAN, Patrick, 35890 LAILLE (FR); MAZZANTE, Angelo, 35520 MELESSE (FR); TOUZE, David, 35200 RENNES (FR); CAUVIN, Laurent, 35250 CHEVAIGNE (FR)
(74) Representative: Interdigital

(57) **Abstract**

A method of mapping an input image in an input color space into an output image in an output color space, the input color space being larger than the output color space, the method comprising:
obtaining (220) an intermediate color space, the input color space being larger than the intermediate color space, the intermediate color space being larger than the output color space;
obtaining (221) a dynamic color space conversion operator from an analysis of the input image;
applying (222) a first mapping to the input image to obtain an intermediate image in the intermediate color space using the dynamic color space conversion operator; and,
applying (223) a second mapping to the intermediate image to obtain the output image applying a static color space conversion operator.

## Description

### 1. TECHNICAL FIELD

At least one of the present embodiments generally relates to the field of video processing for Wide Color Gamut (WCG), High Dynamic Range (HDR) or Standard Dynamic Range (SDR) formats. More specifically it relates to color space conversion.

### 2. BACKGROUND

HDR is a new domain and there will be a transition phase during which both HDR content and SDR content will be delivered to a end user. HDR relies on BT.2020 color space (see document Recommendation ITU-R BT.2100-2, Image parameter values for high dynamic range television for use in production and international programme exchange, 07/2018*)* and SDR relies on BT.709 color space (see Recommendation ITU-R BT. 709-6, Parameter values for the HDTV standards for production and international programme exchange, 06/2015*).* Therefore, at least in this domain, there is a need of dynamic range conversion between HDR dynamic range and SDR dynamic range and there is also a need for color space conversion between the BT.2020 and the BT.709 color spaces.

A color space conversion that adapts a large input color space (e.g. BT.2020) toward a smaller output color space (e.g. BT.709) exhibits some artefacts.

For instance, well-known color space conversion methods based on gamut clipping exhibits loss of details for saturated colors located in-between these two color-spaces. Known gamut mapping methods that better controls the input color characteristics (hue, saturation, lightness (i.e., luminance) exhibits some desaturation problems.

It is desirable to overcome the above drawbacks.

It is particularly desirable to find a method allowing preserving the input color characteristics while avoiding desaturation issues.

### 3. BRIEF SUMMARY

In a first aspect, one or more of the present embodiments provide a method of mapping an input image in an input color space into an output image in an output color space, the input color space being larger than the output color space, the method comprising:
obtaining an intermediate color space, the input color space being larger than the intermediate color space, the intermediate color space being larger than the output color space;
obtaining a dynamic color space conversion operator from an analysis of the input image;
applying a first mapping to the input image to obtain an intermediate image in the intermediate color space using the dynamic color space conversion operator; and,
applying a second mapping to the intermediate image to obtain the output image applying a static color space conversion operator.

In an embodiment, the analysis of the input image comprises
detecting pixels of the input image having an out of gamut (OOG) color, an OOG color corresponding to a color of the input color space that cannot be represented in the intermediate color space;
determining at least one OOG chroma density corresponding to a percentage of pixels of the input image having a OOG color;
determining at least one OOG chroma strength corresponding to a mean of chroma levels of pixels of the input image having a OOG color; and,
determining the dynamic color space conversion operator from the at least one OOG chroma density and the at least one OOG chroma strength.

In an embodiment, the obtaining of the dynamic color space conversion operator from the at least one OOG chroma density and the at least one OOG chroma strength allows selecting the dynamic color space conversion operator in a set comprising a gamut clipping and at least one gamut mapping, each gamut mapping being different.

In an embodiment, the obtaining of the dynamic color space conversion operator from the at least one OOG chroma density and the at least one OOG chroma strength comprises comparing the at least one OOG chroma density with a first value and comparing the at least one OOG chroma strength with a second value.

In an embodiment, a single OOG chroma density and a single OOG chroma strength are determined and the single OOG chroma density and the single OOG chroma strength are independent of a hue.

In an embodiment, a OOG chroma strength and a OOG chroma density are determined at least for each hue vertex of the input color space.

In an embodiment, for at least one pixel of the input image having an OOG color, the dynamic color space conversion operator is determined based on OOG chroma strength and a OOG chroma density depending on a hue vertex of the pixel.

In an embodiment, metadata representative of the dynamic color space conversion operator are transmitted along with the output image.

In an embodiment, a reconstructed version of the input image is obtained by applying on a reconstructed version of the output image an inverse static color space conversion operator inverting the second mapping to obtain an intermediate reconstructed image and an inverse dynamic color space conversion operator inverting the first mapping determined based on the metadata representative of the dynamic color space conversion operator.

In a second aspect, one or more of the present embodiments provide a device for mapping an input image in an input color space into an output image in an output color space, the input color space being larger than the output color space, the device comprising electronic circuitry configured for:
obtaining an intermediate color space, the input color space being larger than the intermediate color space, the intermediate color space being larger than the output color space;
obtaining a dynamic color space conversion operator from an analysis of the input image;
applying a first mapping to the input image to obtain an intermediate image in the intermediate color space using the dynamic color space conversion operator; and,
applying a second mapping to the intermediate image to obtain the output image applying a static color space conversion operator.

In an embodiment, the analysis of the input image comprises
detecting pixels of the input image having an out of gamut (OOG) color, an OOG color corresponding to a color of the input color space that cannot be represented in the intermediate color space;
determining at least one OOG chroma density corresponding to a percentage of pixels of the input image having a OOG color;
determining at least one OOG chroma strength corresponding to a mean of chroma levels of pixels of the input image having a OOG color; and,
determining the dynamic color space conversion operator from the at least one OOG chroma density and the at least one OOG chroma strength.

In an embodiment, the obtaining of the dynamic color space conversion operator from the at least one OOG chroma density and the at least one OOG chroma strength allows selecting the dynamic color space conversion operator in a set comprising a gamut clipping and at least one gamut mapping, each gamut mapping being different.

In an embodiment, the obtaining of the dynamic color space conversion operator from the at least one OOG chroma density and the at least one OOG chroma strength comprises comparing the at least one OOG chroma density with a first value and comparing the at least one OOG chroma strength with a second value.

In an embodiment, a single OOG chroma density and a single OOG chroma strength are determined and the single OOG chroma density and the single OOG chroma strength are independent of a hue.

In an embodiment, a OOG chroma strength and a OOG chroma density are determined at least for each hue vertex of the input color space.

In an embodiment, for at least one pixel of the input image having an OOG color, the dynamic color space conversion operator is determined based on OOG chroma strength and a OOG chroma density depending on a hue vertex of the pixel.

In an embodiment, metadata representative of the dynamic color space conversion operator are transmitted along with the output image.

In an embodiment, a reconstructed version of the input image is obtained by applying on a reconstructed version of the output image an inverse static color space conversion operator inverting the second mapping to obtain an intermediate reconstructed image and an inverse dynamic color space conversion operator inverting the first mapping determined based on the metadata representative of the dynamic color space conversion operator.

### 4. BRIEF SUMMARY OF THE DRAWINGS

FIG. 1 illustrates a context in which various embodiments may be implemented;
FIG. 2 illustrates details of a pre-processor;
FIG. 3 illustrates details of a post-processor;
FIG. 4 illustrates a pre-processing module adapted to an embodiment based on SL-HDR1;
FIG. 5 illustrates an example of system that could implement a production system or a home terminal;
FIG. 6 shows a dependance graph between different color models;
FIG. 7 represents a 3D representation of an input RGB model and of an output xyY model;
FIG. 8 shows a projection from a 3D color space to a 2D color plane for a certain lightness level;
FIG. 9 represents examples of results of projections in a 2D plane;
FIG. 10 illustrates a 2D CIE 1931 chromaticity diagram;
FIG. 11 illustrates the Out Of Gamut (OOG) colors between the boundary of the BT.2020 color space and the boundary of the BT.709 color space;
FIG. 12 illustrates a color space conversion module of a SL-HDR1 pre-processor;
FIG. 13 details a pre-mapping module and a post mapping module;
FIG. 14 illustrates an inverse color space conversion module;
FIG. 15 illustrates an example of pre-mapping method;
FIG. 16 illustrates an example of post-mapping method;
FIGS. 17 and 18 illustrate a chrominance representation in CIE 1931 diagram;
FIG. 19 illustrates a single step chrominance mapping curve;
FIG. 20 illustrates dual steps chrominance mapping curves;
FIG. 21A illustrates schematically a pre-processing module according to an embodiment;
FIG. 21B illustrates schematically a dual color space conversion module according to an embodiment;
FIG. 22A illustrates schematically a method of mapping an input image in an input color space into an output image in an output color space;
FIG. 22B illustrates a picture analysis process;
FIG. 23 represents a mask image with region of interest (ROI) in white corresponding to pixels of an input image having an OOG color;
FIG. 24A shows an example of a hue dependent OOG chroma strength distribution calculated for the six hue sectors that are defined by the three BT.2020 primary colors (R, G, B) and secondary colors (Ye, Cy, Mg);
FIG. 24B illustrates a result of an averaging of two adjacent sectors;
FIG. 25 shows an example of a hue dependent OOG chroma density distribution calculated for the six hue sectors that are defined by the three BT.2020 primary colors (R, G, B) and secondary colors (Ye, Cy, Mg);
FIG. 26 illustrates an example of a hue independent decision map;
FIG. 27 illustrates an example of a hue independent decision map;
FIG. 28 illustrates color space conversion operators;
FIG. 29 illustrates an example of process for selecting a color space conversion operator;
FIG. 30 illustrates an example of secondary decision map;
FIG. 31 illustrates an example of process for selecting a color space conversion operator;
FIG. 32 illustrates the hue and the chroma excursion for two colors on the projection in a 2D plan of the selected 3D color model;
FIG. 33 illustrates a process applied to each pixel of an input image to determine a hue rotation operator and a color space conversion operator; and,
FIG. 34 illustrates a modified inverse color space conversion module.

### 5. DETAILED DESCRIPTION

Nowadays, videos are generally produced in one of the following three color spaces: BT.709, DCI P3 (see SMPTE EG 432-1:2010 et SMPTE RP 431-2:2011) also called P3 or BT.2020. In some cases, these produced videos need to be distributed in two or three of these color spaces. For instance, HDR is a new domain and there will be a transition phase during which both HDR content and SDR content will be delivered to the end user. HDR relies on the BT.2020 color space and SDR relies on the BT.709 color space. Therefore, there is a need of dynamic range conversion between HDR dynamic range and SDR dynamic range and there is also a need for color space conversion between the BT.2020 and the BT.709 color spaces. In some cases, this color space conversion needs to be invertible, as this is the case for the SL-HDR1 HDR distribution technology (see document ETSI TS 103 433-1 V1.4.1, "High-Performance Single Layer High Dynamic Range (HDR) System for use in Consumer Electronics devices; Part 1: Directly Standard Dynamic Range (SDR) Compatible HDR System (SL-HDR1)", August 23, 2021) just called *SL-HDR1* in the following.

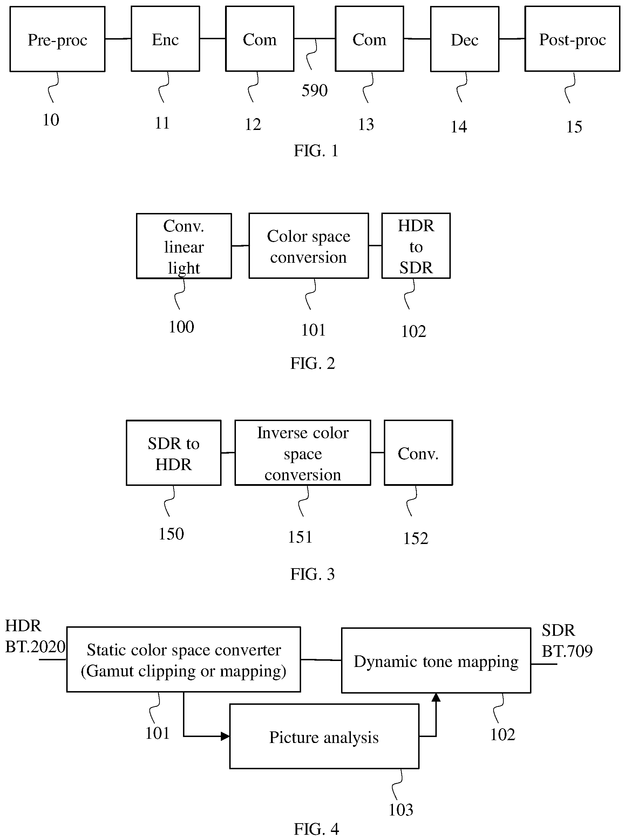

**FIG. 1** illustrates a context in which various embodiments may be implemented.

FIG. 1 depicts a production system and a home terminal (set top box or TV).

The production system comprises a pre-processor 10 implementing a HDR decomposition process, an encoding module 11 in charge of encoding video data produced by the pre-processor 10 in a video format such as AVC ((ISO/CEI 14496-10 / ITU-T H.264) encoder, HEVC (ISO/IEC 23008-2 - MPEG-H Part 2, High Efficiency Video Coding / ITU-T H.265)),VVC (ISO/IEC 23090-3 - MPEG-I, Versatile Video Coding/ ITU-T H.266) or any other format based for example on AOM VP9, AV1, AV2. The encoding module 11 is followed by a communication module 12 in charge of transmitting a video stream produced by the encoding module 11 on a communication network 590.

The home terminal comprises a communication module 13 in charge of receiving the video stream transmitted by the communication module 12 on the communication channel 590, a decoding module 14 in charge of decoding the video stream outputted by the communication module 13 and a post-processor 15. The post-processor 15 converts the decoded video data in a format adapted to a display system associated to the home terminal.

**FIG. 2** illustrates details of the pre-processor 10.

The pre-processor 10 comprises a non-linear to linear conversion module 100 converting for example HDR video data in the color gamut BT.2020 from a non-linear domain to a linear domain. The non-linear to linear conversion module 100 is followed by a color space conversion module 101 converting the HDR video data in the color gamut BT.2020 in HDR video data in the color space BT.709 and by a HDR to SDR conversion module 102 converting the HDR video data in the color space BT.709 in SDR video data in the color space BT.709. The pre-processor 10 also uses side information such as a mastering display peak luminance, color primaries, and a color gamut of a container of the HDR and SDR data. The pre-processor 10 generates SDR data from the HDR data, using an invertible process that guarantees high quality reconstructed HDR data.

**FIG. 4** illustrates a pre-processor 10 adapted to an embodiment based on SL-HDR1.

In a version "1" of SL-HDR1, the color space conversion module 101 implements a gamut clipping while a version "2" of SL-HDR1, the color space conversion module 101 applies an actual gamut mapping. The gamut mapping (i.e., BT.2020 to BT.709) is described in section D.3 of SL-HDR1.

The HDR to SDR conversion module 102 implements a tone mapping (TM). It adapts dynamically a luminance (i.e., a lightness) of the HDR data (between "0" and "1000" nits) to SDR data with a luminance in a smaller dynamic range (between "0" and "100" nits), based on a lightness (i.e., luminance) distribution analysis (i.e., based on an histogram of luminance) performed for a set of pictures of the HDR data in a picture analysis module 103. The picture analysis module 103 is also in charge of generating SL-HDR1 metadata intended to be transmitted along the SDR video data and allowing a backward conversion of the SDR video data to HDR video data on the home terminal.

**FIG. 3** illustrates details of the post-processor 15.

The post-processor 15 comprises a SDR to HDR conversion module 150 in charge, if desired or required on the home terminal side, of converting the decoded SDR video data in HDR video data in the color space BT.709. In an embodiment based on SL-HDR1, the SL-HDR1 metadata are used to guide the conversion from SDR to HDR.

The SDR to HDR conversion module 150 is followed by an inverse color space conversion module 151 converting the HDR data in the color space BT.709 in HDR data in the color space BT.2020. The inverse gamut mapping of SL-HDR1 is described in section D.4 of SL-HDR1.

The inverse color space conversion module 151 is followed by a linear to non-linear conversion module 152 converting the HDR video data in the color space BT.2020 from the linear domain to a non-linear domain.

Various embodiments described in the following focus on the color space conversion module 101 and on the inverse color space conversion module 151.

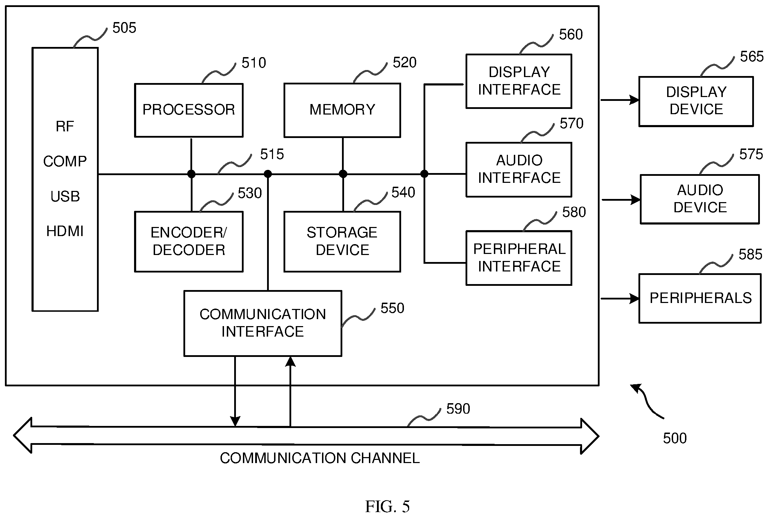

**FIG. 5** illustrates an example of system 500 that could implement the production system or the home terminal.

The system 500 may be an electronic device including, for example, a personal computer, a laptop computer, a tablet computer and a server. One or more elements of the system 500, singly or in combination, may be implemented as an integrated circuit (IC), multiple ICs, and/or discrete components. For example, in one embodiment, a processing, encoding and/or decoding elements of the system 500 are distributed across multiple ICs and/or discrete components. In some embodiments, the system 500 is communicatively coupled to and/or in communication with other systems or devices, via, for example, a communications bus or dedicated input/output ports.

One or more elements of the system 500 may be provided within an integrated housing, with such elements being interconnected and able to transmit data therebetween using any suitable connection arrangement 515 generally known in the art, including, for example, an internal bus (e.g., I2C bus), wiring, and printed circuit boards.

The system 500 includes at least one processor 510 configured to execute instructions for implementing the embodiments described herein, including signal/data coding and processing. The processor 510 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 510 may include at least one central processing unit (CPU), embedded memory, input and output interfaces. All these types of processors are electronic circuitries.

The system 500 includes at least one memory 520, for example, a volatile memory device and/or a non-volatile memory device. The system 500 includes a storage device 540, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 540 may be or include, for example, an internal storage device, an attached storage device, and/or a network accessible storage device. Although shown separately, the memory 520 and the storage device 540 may be collocated, integrated together, or otherwise combined.

The system 500 includes an encoder/decoder module 530 configured to process raw HDR or SDR video data/encoded HDR or SDR video data and to provide encoded HDR or SDR video data/decoded HDR or SDR video data. For instance, the encoder/decoder module 530 may receive encoded HDR video data in BT.2020 from cameras, decode these encoded HDR video data in BT.2020 to obtain raw HDR video data in BT.2020 and provide the raw HDR video data in BT.2020 to the processor 510 for conversion in RAW SDR video data in BT.709. Similarly, the encoder/decoder module 530 may receive encoded SDR video data in BT.709, decode these encoded SDR video data in BT.709 to obtain raw SDR video data in BT.709 and provide the raw SDR video data in BT.709 to the processor 510 for conversion in RAW HDR video data in BT.2020. The encoder/decoder module 530 may include one or more processors and/or memory (not shown). Although FIG. 5 depicts the encoder/decoder module 530 as a separate element of the system 500, in a variant the processor 510 and the encoder/decoder module 530 may be collocated and/or integrated together as a combination of hardware and/or software, e.g., in an electronic package, circuitry or chip. The encoder/decoder module 530 may be or include one or more modules that may be included in one or more separate devices that perform encoding and/or decoding functions.

Instructions for execution by the processor 510 and/or the encoder/decoder module 530 may be stored in the storage device 540 and subsequently loaded into memory 520 for execution by the processor 510. In some embodiments, one or more of processor 510, memory 520, storage device 540, and encoder/decoder module 530 may store one or more items when performing the processes disclosed herein. Such items may include input raw SDR or HDR video data, reconstructed HDR or SDR video data, decoded SDR or HDR video data, sequences (i.e., portions) thereof, bitstreams, video streams, chunks, matrices, variables, operational logic, and intermediate and/or final results from processing of equations, formulas, or operations.

In some embodiments, the memory of the processor 510 and/or the encoder/decoder module 530 is used to store instructions and/or provide working memory for video encoding and decoding functions. In some embodiments, memory external to the processor 510 and/or the encoder/decoder module 530 (e.g., the memory 520 and/or the storage device 540) is used for one or more of these functions and/or, for example, to store an operating system of the system 500.

The system 500 may obtain or receive information via one or more input devices, interfaces, and/or ports as indicated in input block 505. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 500 to other devices via USB and/or HDMI ports or connections. Various forms of input processing may be implemented, for example, by and/or within a separate input processing device or the processor 510.

The system 500 includes a communication interface 550 (that may correspond to communication modules 12 or 13 in FIG. 1) that enables wired and/or wireless communication with other devices, e.g., via the communication channel 590. The communication interface 550 may include one or more transceivers, modems, network cards and the like. The communication channel 590 may be or include wired and/or wireless mediums.

In some embodiments, data may be streamed to the system 500 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 500 via the communication interface 550 and communication channel 590.

The system 500 may provide one or more output signals to one or more output devices. The output devices may include a display device 565 (e.g., touchscreen display, monitor, etc.), an audio device 575 (e.g., speakers), and other peripheral devices 585, including, for example, a stand-alone DVR, a disk player, a stereo system, a lighting system, and other devices that provide a function based on an output of the system 500. The display device 565 can be for a television, tablet, laptop, head-mounted display, or other device. The output device may be used by the operator to decide when switching from a first viewpoint to a second viewpoint. In some embodiments, control signals are communicated between the system 500 and the display device 565, the audio device 575, and/or the peripheral devices 585, enabling device-to-device control with or without user intervention. The output devices may couple to and/or communicate with the system 500 via dedicated connections via respective display, audio, and peripheral interfaces 560, 570, 580. Alternatively, the output devices may couple to and/or communicate with the system 500 via the communication channel 590 and the communication interface 550.

The display device 565 and the audio device 575 may be collocated, integrated, or otherwise combined with the other components of system 500 in a single unit (e.g., a television). Alternatively, the display device 565 and the audio device 575 may be separate from one or more of the other components of the system 500. In embodiments in which the display device 565 and the audio device 575 are external components, the output signals may be provided via dedicated outputs and/or connections, including, for example, HDMI ports, USB ports, or COMP outputs.

In the following, we provide some definitions that are useful for the understanding of the various embodiments.

### Color model, color space, color gamut:

*A color model* (see document FADGI, "Significant Properties for Digital Video ", October 2024*)* refers to a set of parameters that a system uses to represent color of a pixel within an image. Some color models are additive (e.g. RGB linear), while others are subtractive (e.g. YUV, CIE Lab..).

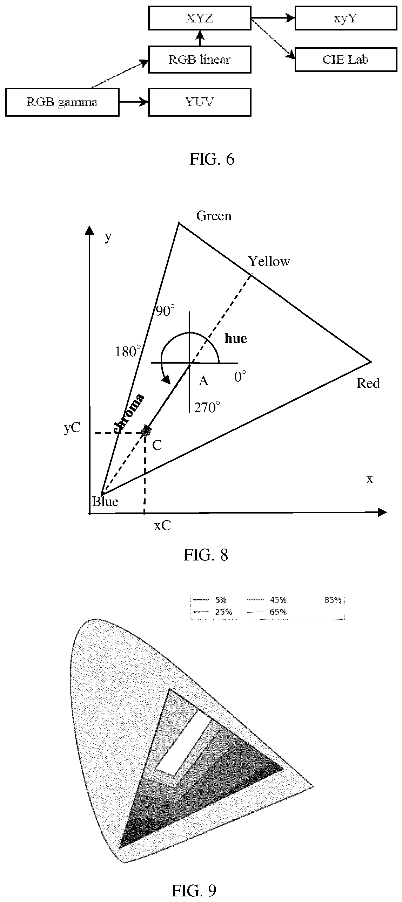

**FIG. 6** shows a dependance graph between different color models.

*A color space* refers to a range of colors that can be represented by a particular color model. It's a subset of the colors visible to the human eye. The color space used in SDR TV is BT.709 while for HDR TV it is BT.2020.

*A color gamut* is a subset or range of colors within the color space that can be captured by an input device (camera) or can be reproduced on an output device (monitor, TV, display).

One can note that the expression *gamut mapping* was originally used to represent a mapping from a first color gamut to a second color gamut. However, as the technology evolved, this expression is also used to represent a conversion from a first color space to a second color space. In that case, the expression gamut mapping, *color space conversion, color space mapping* or just *mapping* can be indifferently used.

In addition, in the reminder of this document, one can assimilate a color gamut as a color space and vice versa.

### 2 dimensional (2D) versus 3 dimensional (3D) representation

A conversion between an input RGB model and an output xyY model is done by using a 3×3 matrix (MAT) followed by a Normalization (Norm) step as represented below:
RGB linear →MAT→ XYZ → Norm → xyY

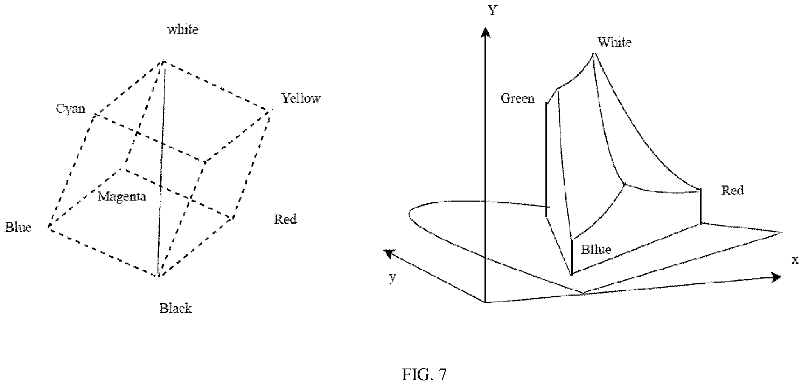

**FIG. 7** represents a 3D representation of the input RGB model (on the left) and of the output xyY model (on the right).

**FIG. 8** shows a projection from a 3D color space to a 2D color plane (x,y) for a certain lightness (i.e., luminance) level *Yc.* A color C can be characterized by hue and chroma dimensions. The chroma refers to a distance between C and an *achromatic point A* (also called *white point).* The hue refers to an angle between a segment [CA] and a horizontal line intersecting the white point *A.*

The Hue and the chroma dimensions are calculated using equations eq. 1 and eq. 2 below:
∘ $Hue = atan \frac{\left(yC-yA\right)}{\left(xC-xA\right)} at constant lightness Yc .$
∘ $Chroma = \sqrt{{\left(xC-xA\right)}^{2} + {\left(yC+yA\right)}^{2}} at constant lightness Yc .$

A projection in the 2D (x,y) plane can be a triangle or a quadrilateral shape depending on the lightness level *Yc.*

**FIG. 9** represents examples of results of projections in a 2D plane.

### CIE 1931 chromaticity diagram

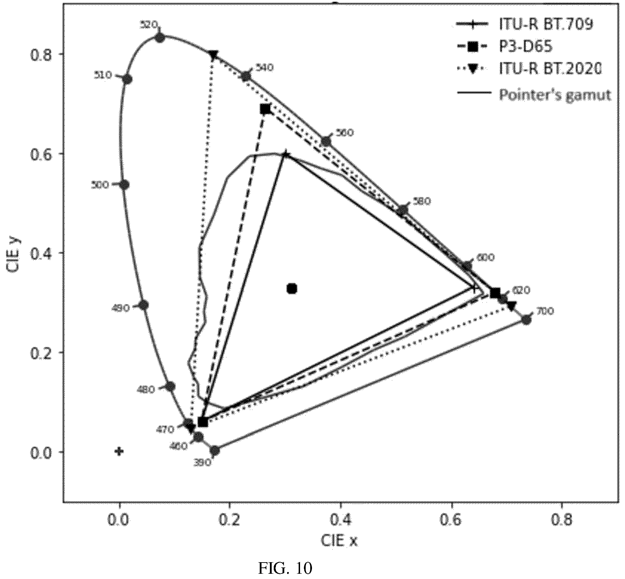

**FIG. 10** illustrates a 2D (x,y) *CIE 1931 chromaticity diagram.*

As can be seen in FIG. 10, the human perception range is defined by the CIE 1931 "horse's shoe". Natural colors of the world are defined in a *Pointer's gamut.* BT.709 represents the color space of a SDR signal. P3 and BT.2020 represent two color spaces of a HDR signal.

A percentage of coverage relative to the CIE 1931 diagram (percentage of coverage of the human perception range) or the Pointer's gamut is given in the table TAB1:

**Table TAB 1**

| **Color space** | **Coverage CIE 1931 horse shoe** | **Coverage Pointer's gamut** |
|---|---|---|
| **BT.709** | 33.5% | 69.4 % |
| **P3** | 45.5% | 86.9 % |
| **BT. 2020** | 63.3 % | 99.9 % (fully enclose Pointer's gamut) |

Most of the display technologies can reproduce all colors of the P3 color space. Only some laser projectors are compliant with the BT.2020 color space.

### Out Of Gamut (OOG) colors

*Out Of Gamut (OOG)* colors represent source colors (e.g. BT.2020) that cannot be represented in a target color space (e.g., BT.709). In this document, a convention to characterize these colors is OOG Large color space/Small color space (e.g. OOG-BT.2020/BT.709).

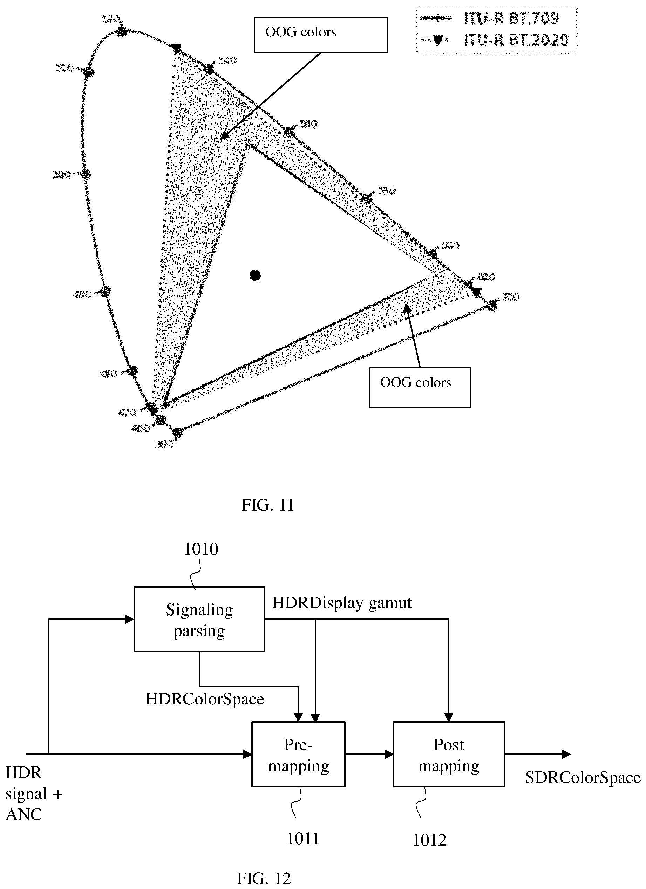

**FIG. 11** illustrates the OOG colors between the boundary of the BT.2020 color space and the boundary of the BT.709 color space.

### Video signaling

A video is exchanged between multiple devices. Generally, information is carried along the video to inform on its characteristics. For instance, when exchanging HDR videos using a Serial Data Interface (SDI) technology (SMPTE 292M | SMPTE 344M | SMPTE 372M | SMPTE 424M standards), some Ancillary Data (ANC) are defined in production and transmitted along the HDR signal. These static parameters are used for example on the home terminal side to adapt the HDR data to a home TV characteristic. SMPTE ST-0425-5 *(*SMPTE ST 425-1 "Source Image Format and Ancillary Data Mapping for the 3 Gb/s Serial Interface ", May 13, 2014*)* and SMPTE ST-2086 (SMPTE ST-2086 "Mastering Display Color Volume metadata supporting High luminance and wide color gamut images" April 9, 2018*)* describe colorimetric metadata that are of interest for various embodiments in a SL-HDR1 use case.

### Color space conversion using HDR signaling

In a SL-HDR1 use case, the pre-processor (called *SL-HDR1 pre-processor* in the following) analyses the ANC metadata to configure the HDR to SDR conversion.

**FIG. 12** illustrates a color space conversion module 101 of the SL-HDR1 pre-processor. The color space conversion module of FIG. 12 comprises a signaling parsing module 1010 in charge of obtaining and distributing the ANC metadata and a pre-mapping module 1011 and a post-mapping module 1012.

For instance, the HDR signal coming from the production may be characterized by a *HDRDisplay* color space (e.g. P3) and is represented in a *HDRColorSpace* container (e.g. BT.2020). The derived SDR signal is characterized by a *SDRColorSpace* container and is generally set to BT.709. When the *SDRColorSpace* container is set to BT.2020 then the pre and the post-mappings are bypassed.

Table TAB2 shows three configurations for pre and post-mapping based on these metadata when the *SDRColorSpace* container is set to BT.709.

**Table TAB2**

| | HDR signaling (ANC) | | Color Space Conversion (CSC) | |
|---|---|---|---|---|
| | HDRColorSpace (SMPTE ST-425-5) | HDRDisplay Gamut (SMPTE ST-2086) | Pre-mapping | Post-mapping |
| Configuration 1 SL-HDR1 v1 | BT.2020 | BT.2020 or P3 or BT.709 | BT.2020 to BT.709 Matrix + clipping | bypass |
| Configuration 2 SL-HDR1 v2 | BT.2020 | P3 | BT.2020 to P3 Matrix + clipping | P3 to BT.709 Gamut mapping |
| Configuration 3 SL-HDR1 v2 | BT.2020 | BT.2020 | Bypass | BT.2020 to BT.709 Gamut mapping |

These three configurations may be implemented using an architecture described in detail in SL-HDR1 (section D.3).

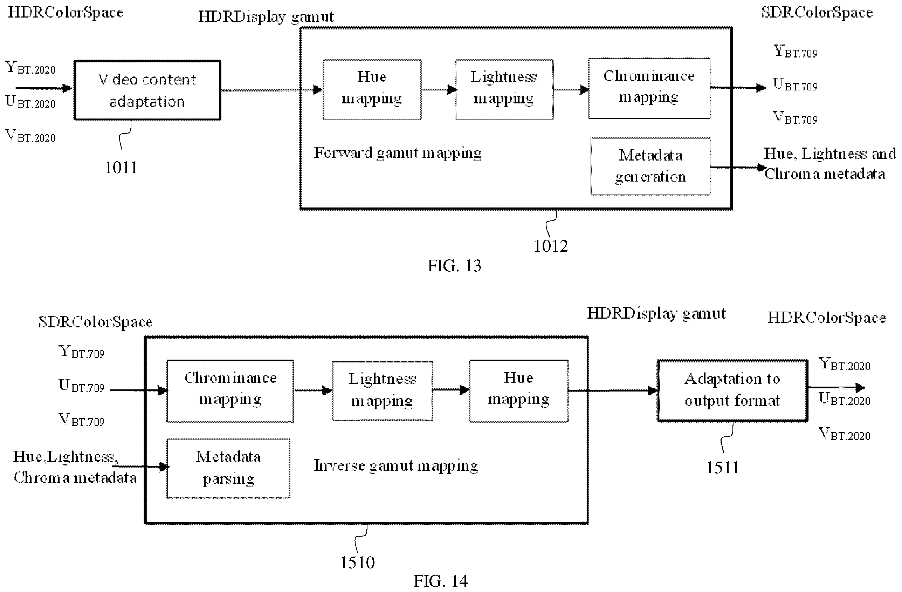

**FIG. 13** details the pre-mapping module 1011 and the post-mapping module 1012.

The pre-mapping module 1011 is called *video content adaptation* module and is implemented in the form of a bypass or a simple operator (3x3 matrix + clipping) that is called in the following *gamut clipping* or *hard clipping.*

The post-mapping module 1012 is called *forward gamut mapping* module. When not in bypass mode, it is a complex transform but can be implemented by a 3D-LUT (Look-Up Table). A mathematical model implements three consecutive mapping operators (Hue, Lightness, Chrominance) as shown in FIG. 13.

Parameters for each operator are stored in several variables specified in clause 6.3.9. of SL-HDR1. These variables may be transmitted explicitly as metadata to configure the inverse color space conversion module on the home terminal for an accurate reconstruction.

The HDR BT.2020 to SDR BT.709 conversion done in the SL-HDR1 pre-processor is reversible in the post-processor (called SL-HDR1 post-processor) to reconstruct a good HDR signal. The reversibility must be verified for both the dynamic range conversion and the color space conversion using the inverse color space conversion module 151 in the SL-HDR1 post-processor.

For the inverse color space conversion (see SL-HDR1 Annex D.4), the configuration is done using the same three parameters *HDRColorSpace, HDRDisplay* color space, *SDRColorSpace.*

**FIG. 14** illustrates an inverse color space conversion (i.e., inverse gamut mapping) module 151.

The inverse color space conversion module 151 comprises an inverse post-mapping module 1510 also called *inverse gamut mapping* or *gamut expansion* module. The inverse gamut mapping module may be implemented in the form of a 3D-LUT. A mathematical model used to derive the 3D-LUT implements three consecutive remapping operators (Hue, Lightness, Chrominance). In addition, the inverse color space conversion module 151 comprises an inverse pre-mapping module 1511 that is also called *Adaptation to output format* module and is implemented by a 3×3 matrix.

In the following a state of the art of color space conversion is provided.

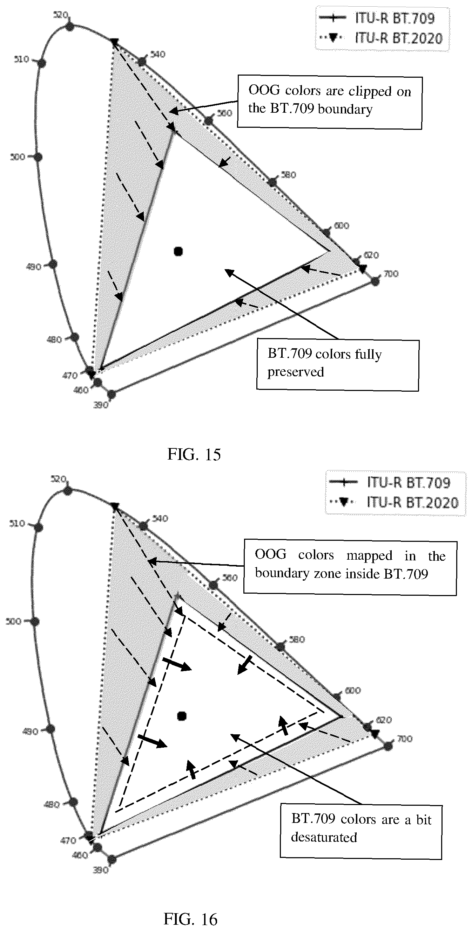

**FIG. 15** illustrates an example of pre-mapping method for the configuration 1 of SL-HDR1-v1 (see table TAB2). When performing "BT.2020 to BT.709 Gamut Clipping", the Out Of Gamut (OOG BT.2020/BT.709) colors between BT.709 and BT.2020 are clipped (as represented by dashed arrows in FIG. 15) on the output BT.709 boundary while the BT.709 input colors are fully preserved.

**FIG. 16** illustrates an example of post-mapping method for the configuration 3 of SL-HDR1-v2 (see table TAB2). When performing the "BT.2020 to BT.709 Gamut Mapping", the OOG BT.2020/BT.709 colors are mapped (as represented by dashed arrows in FIG. 16) into a boundary zone of the output BT.709 color space. The BT.709 input colors are partially preserved. The colors close to the boundary of BT.709 are compressed inside BT.709 (as represented by bold arrows in FIG. 16).

Several static color space conversion methods exist in the literature when converting from a large input color space (e.g. BT.2020) toward a smaller output color space (e.g. BT.709). They all exhibit advantages and drawbacks.

A report has been published by ITU-R in 2017 and is referenced as BT.2407 (ITU-R BT. 2407 "Color gamut conversion from ITU-R BT.2020 to ITU-R BT. 709"-Oct 2017*).* This report explains principles of color space conversion and describes six different solutions. One can note that they are all static methods. None of them adapts dynamically their parameters depending on the image content and more specifically if its color distribution fills the entire BT.2020 color space.

A problem solved by the various embodiments below relates to the configuration 3 in table TAB2 and when post-mapping is set to "BT.2020 to BT.709 gamut mapping" (bottom right cell in table TAB2).

The color conversion from a large input color space (e.g. *HDRColorSpace=BT.2020, HDRDisplay Gamut =* BT.2020) toward a smaller output color space (e.g. *SDRColorSpace=BT.709)* exhibits some defaults such as loss of details, desaturation or hue distortions. They are detailed in table TAB3.

**Table TAB3**

| Methods | Advantages | Drawbacks / limitations |
|---|---|---|
| BT.2020 to BT.709 gamut clipping (see FIG. 15) | -Preserve 100% of the BT.709 input colors. | - loss of spatial details at the output for OOG-BT.2020/BT.709 |
| | | - cannot reconstruct these OOG colors. |
| | -Low complexity | The reversibility feature is not possible. |
| BT.2020 to BT.709 gamut mapping (see FIG. 16) | -We can reconstruct the OOG colors. | -Color desaturation: |
| | | The BT.709 colors from BT.2020 input container is mapped in a preservation zone of the output color space that is smaller than BT.709 (e.g. 80%) exhibiting desaturated colors. |
| | -Details are preserved | |
| | | -High complexity algo but can be implemented by a 3D-LUT |
| | | -Only static implementation possible |

To solve the issues and the limitations described above, the various embodiments described below disclose a new color space conversion method that maps a large input color space (e.g. *HDRColorSpace=BT.2020, HDRDisplay Gamut =* BT.2020) toward a smaller output color space (e.g. *SDRColorSpace=BT.709)* by using a dual color space converter instead of one wherein the color space conversion is performed in two steps.

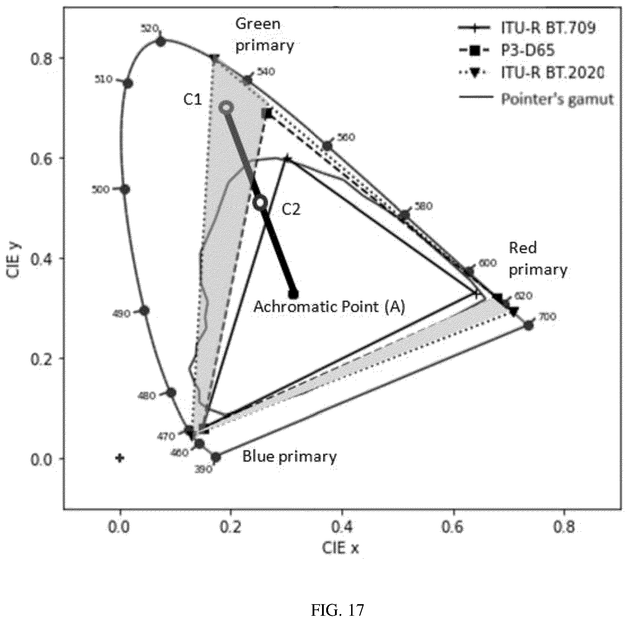

The motivation is that all colors from the input color space do not have a same probability of presence in an image. In the CIE 1931 diagram **(****FIG. 17****),** the further a color move away from the achromatic color (A) towards the BT.2020 boundary (defined by the three primaries Red, Green or Blue), the less this color is probable.

A first characteristic of the embodiments is to define an intermediate color space (ICS) to distinguish a first set of least likely (rare) colors from a second set of most likely (common) colors.

A second characteristic consists in mapping the first set of colors (rare) by using a first dynamic and simple method (called color space conversion *CSC1* in the following), based on an analysis of the input colors distribution in an image (or in a set of images).

A third characteristic consists in mapping the second set of colors (common) by using a second static and precise method (called color space conversion *CSC2* in the following).

One requirement of the embodiments is to define the intermediate color space *ICS* such that it occupies a large proportion of the natural colors of the pointer's gamut. The P3 color space is a good candidate as it includes 87% of the Pointer's gamut (see table TAB1). In the example of FIG. 17, we observe that along the bolded line passing through *C1* and *C2,* the *C1* color outside the P3 color space is rare compared to the *C2* color inside the P3 color space. Considering this hypothesis, we may have a less precise mapping method for *C1* than for *C2.* Indeed, in that case, a hue shift doesn't degrade the visual experience.

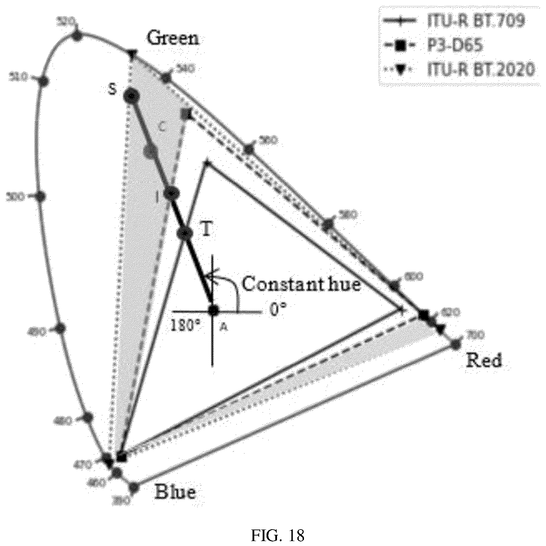

Let's consider a color *C* (See **FIG. 18**). The line of constant lightness and constant hue connecting the colors *A* and *C*, intersects the three color spaces boundaries of BT.2020, ICS(=P3) and BT.709 at respective colors *source S, intermediate I* and *target T.*

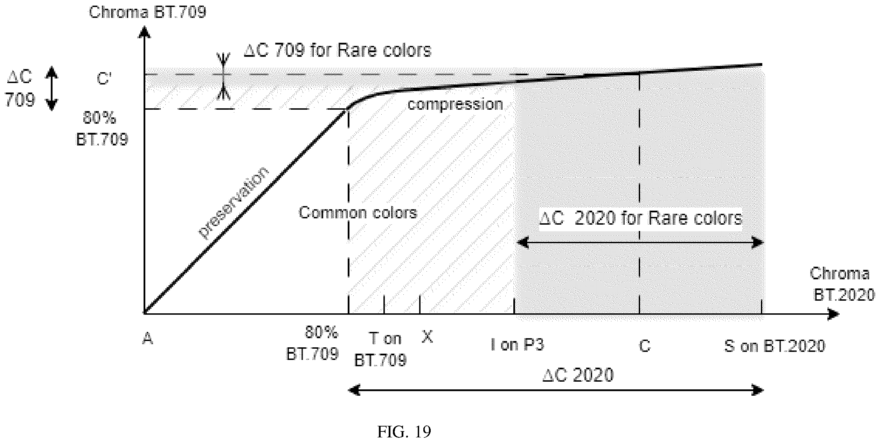

**FIG. 19** illustrates a single step chrominance mapping curve of the prior art. A linear portion of the curve (from the origin *A* to 80% of the color space BT.709) corresponds to the (BT.709) input colors that are preserved at the output (i.e., *preservation portion* of the curve). For a *compression portion* (illustrated by the stripped part in FIG. 19), the input color S on the BT.2020 boundary is mapped to the output BT.709 boundary. The three colors *C, I, T* are mapped in a upper part of the output chroma range defined by ΔC 709. The rare input colors "between P3 and BT.2020" are mapped into a quite large part "ΔC 709 for Rare colors" of the ΔC 709 output range. This is sometime useless when these rare colors are not present in an image. This implies a quite large output chroma range (ΔC 709) to compress a quite large input chroma range (ΔC 2020). This constraint minimizes the loss of details but on the other hand this creates annoying color desaturation at the BT.709 output.

In one example, this single step chrominance mapping curve can be modelized for the preservation portion by a first linear equation and for the compression portion by a parabolic equation followed by a second linear equation. Table TAB4 provides examples of first linear equation, parabolic equation and second linear equation:

**Table TAB4**

| **Portion** | **Equation C_709=f(C_2020)** | **Condition range for C_2020** |
|---|---|---|
| **preservation** | s1 x C_2020 | 0 <= C_2020 < 0.8xAT |
| **compression** | a x C_2020 ² + b x C_2020 + c | 0.8xAT <= C_2020 < AX |
| | AT - s2 x (AS - C_2020) | AX <= C_2020 < AS |

Other equations can be applied to model the compression portion.

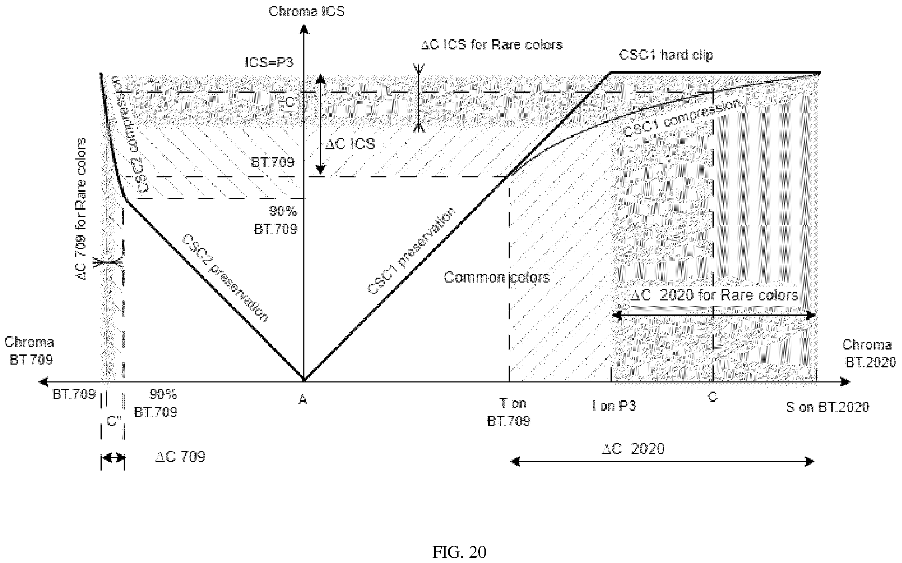

To solve a trade-off between loss of details and desaturation, the dual steps chrominance mapping illustrated in **FIG. 20** is proposed.

For the first color space conversion (CSC1 curve, right side of FIG. 20), the linear portion (from the origin *A* to *T* on BT.709, i.e., CSC1 preservation curve) corresponds to the BT.709 input colors that are fully preserved in the intermediate color space ICS.

For the compression portion of the CSC1 curve, the input color *S* is mapped to the ICS(=P3) color space boundary (on the Chroma ICS axis with origin A in FIG. 20). The three input colors *C, I, T* are mapped between the BT.709 and ICS=P3 color spaces.

The rare input colors "between P3 and BT.2020" (e.g. between *I* and *S* on the Chroma BT.2020 axis) are compressed the same way as the common input colors "between BT.709 and P3", using a compression portion of the CSC1 curve. In this case, "ΔC ICS for rare colors" is maximum. The "ΔC ICS for rare colors" resulting from the first color space conversion corresponds to a chroma range that is allocated dynamically depending on characteristics (density, chroma strength) of the rare colors located between the two color spaces ICS (=P3) and BT.2020. For example, if such colors are present (density = high) or very saturated (chroma strength = high), we allocate a maximum "ΔC ICS for rare colors". If they are not present (density = low) nor saturated (chroma strength = low), we annly a minimum "ΔC ICS for rare colors". For instance, the input color *C* is mapped on the intermediate output color C*'* in the ICS(=P3) color space.

When there are a few rare input colors it may be useless to compress them. The color space conversion CSC1 can be switch from a compression (compression portion of the CSC1 curve in FIG. 20) to a gamut clipping allowing full preservation of P3 colors in the intermediate ICS color space (hard clip portion of the CSC1 curve in FIG. 20). In this case "ΔC ICS for rare colors" is minimum (i.e., Δ*C ICS for rare colors =* 0).

Based on the dynamic aspect of the color space conversion CSC1, the second color space conversion (CSC2 curve, left side of FIG. 20) is characterized by a lower compression range (ΔC 709) that allows to extend the preservation zone from for example 80% to 90% of BT.709. We obtain better details preservation and much lower desaturation at the BT.709 output.

This dual mapping curves can be modelized using the equations from table TAB4 but with different coefficients and conditions for the input range compared to the single mapping curve (FIG. 19).

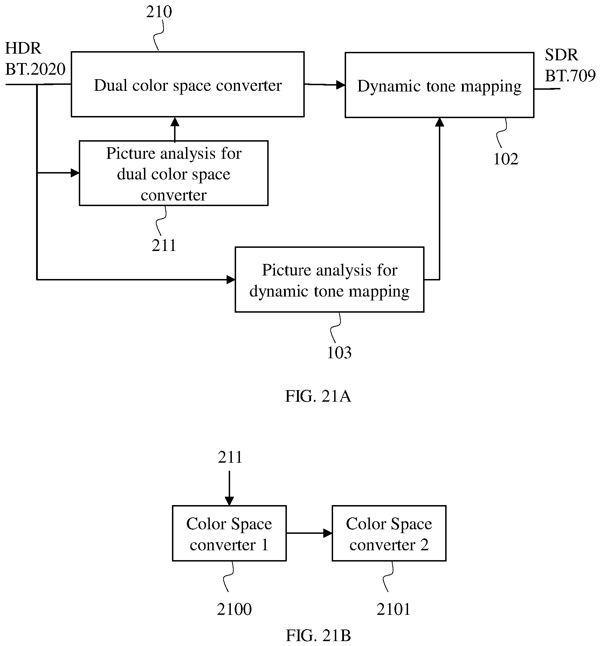

**FIG. 21A** illustrates schematically a pre-processing module according to an embodiment.

The pre-processing module of FIG. 21A is similar to the pre-processing module illustrated in FIG. 4. Indeed, the pre-processing module of FIG. 21A comprises a dynamic tone mapping module 102 and a picture analysis module 103. However, the color space conversion module 101 is replaced by a dual color space conversion module 210 and an additional picture analysis module 211 is added to analyze input HDR BT.2020 images and to update dynamically parameters of the dual color space conversion module 210.

One can note that, in another embodiment, the dynamic tone mapping module (i.e. the SDR conversion module) 102 is placed before the dual color space conversion module 210. In this embodiment, instead of HDR data, SDR data are inputted to the dual color space conversion module 210. The dual color space conversion module 210 receives therefore SDR data in the BT.2020 color space and outputs SDR data in the BT.709 color space.

**FIG. 21B** illustrates schematically the dual color space conversion module 210 according to an embodiment.

The dual color space conversion module 210 comprises a first color space conversion module (CSC1) 2100 and a second color space conversion module (CSC2) 2101.

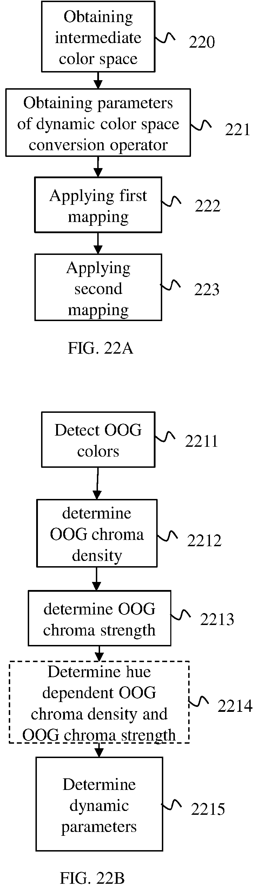

**FIG. 22A** illustrates schematically a method of mapping an input image in an input color space into an output image in an output color space, the input color space being larger than the output color space.

The input color space is for example BT. 2020 and the output color space is for example BT.709. However, the method applies to any couple of color spaces in which an input color space is larger than the output color space.

The method of FIG. 22A is for example implemented by the processor 510 of the system 500. The system 500 implements for example all modules of the pre-processor of FIG. 21A comprising the dual color space conversion module 210, the first color conversion module (CSC1) 2100, the second color conversion module (CSC2) 2101 and the picture analysis module 211.

In a step 220, the processor 510 obtains an intermediate color space, the input color space being larger than the intermediate color space, the intermediate color space being larger than the output color space. The intermediate color space may be the P3 color space as mentioned above but other intermediate color spaces may be used.

In a step 221, the processor 510 determines parameters of a dynamic color space conversion operator CSCO1 from an analysis of the input image. The analysis is performed by the picture analysis module 211 and the determined parameters of the dynamic color space conversion operator CSCO1 are provided to the first color space conversion module 2100. Step 221 is detailed in relation to FIG. 22B below.

In a step 222, a first color space conversion is applied to the input image to obtain an intermediate image in the intermediate color space ICS(=P3) using the dynamic color space conversion operator CSCO1 with the determined parameters.

In a step 223, the processor 510 applies a second mapping to the intermediate image to obtain the output image using a static color space conversion operator CSCO2.

An advantage of the method of FIG. 22A based on the dual color space conversion module 210 is that the input colors within the output color space (i.e., BT.709) are now mapped in a larger preservation zone of the BT.709 color space compared to the state of art solutions. We expect a preservation of around 90% of BT.709 colors compared to 80% currently (see table TAB3). This will imply less desaturated colors and more detail preservation in the output image.

One can note that, until now, the method of FIG. 22A is applied to a single input image. In another embodiment, the method of FIG. 22A may be applied to a set of images of a video sequence, for example, between two scene cuts. In that case the picture analysis of step 221 is applied to all or some images of the set of images and the determined parameters of the dynamic color space conversion operator CSCO1 apply to all picture between the two scene cuts.

**FIG. 22B** illustrates a picture analysis process applied in step 221 by the picture analysis module 211.

The method of FIG. 22B is for example implemented by the processor 510 of the system 500. In the following, the term OOG-BT.2020/P3 is replaced by *OOG* for a better readability.

In a step 2211, the processor 510 applies a detection process to detect pixels of the input image having a OOG color. An output of step 2211 is a mask image having the same width *W* and same height *H* than the input image. The mask image indicates with a value *OOG chroma_mask*=1 a pixel with an OOG color and with a value *OOG chroma mask=0* a pixel without an OOG color.

In an embodiment of step 2211, for each pixel of the input image, the processor 510 applies a projection of the color components of the pixel from a 3D domain (i.e., RGB, YUV, xyY) to a 2D domain for example (x, y) as illustrated in FIGS. 8 and 9. Referring to FIG. 18, for each pixel with a color *C*, the processor 510 calculates a chroma distance CA between the color C and the achromatic color A using equation eq. 2 and a chroma distance IA using equation eq. 3 below: $\begin{matrix}Chroma distance IA = \sqrt{\left.{\left(xI-xA\right)}^{2}+{\left(yI-yA\right)}^{2}\right)} at constant \\ lightness Yc .\end{matrix}$

Each pixel with CA>IA is considered as a pixel with an OOG color. As a reminder, the line of constant lightness and constant hue connecting *A* and *C*, intersects the two gamut boundaries of the BT.2020 color space and of the ICS(=P3) color space at the respective color source *S* and color intermediate *I*.

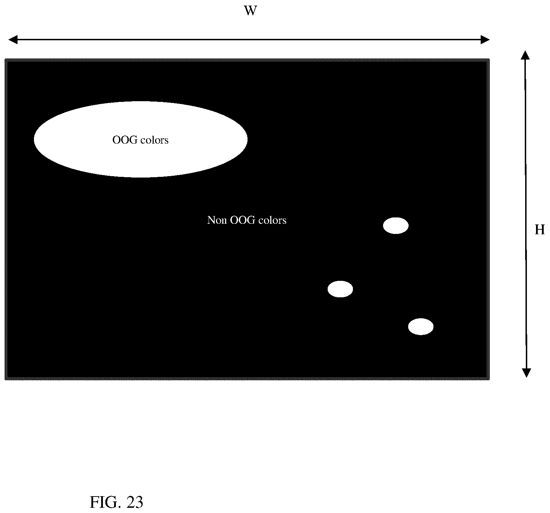

**FIG. 23** represents a mask image with region of interest (ROI) in white corresponding to pixels of the input image having an OOG color.

In a step 2212, the processor 510 determines a OOG chroma density *OOG_CD* corresponding to a percentage of pixels of the input image having a OOG color. $OOG _ CD = \frac{OOG _ CN}{NB _ pixel _ image}$ where *OOG_CN* is the number of pixels with an OOG color and NB_pixel_image is the number of pixels in the input picture.

In a step 2213, the processor 510 determines a OOG chroma strength corresponding to a mean of chroma level of all pixels of the input image having a OOG color.

In an embodiment of step 2213, for each pixel of the input image having an OOG color, the processor 510 determines the OOG chroma level *OOG_CL* as follows: $OOG _ CL = \frac{CI}{SI} = \frac{\left(CA-IA\right)}{\left(SA-IA\right)}$ where the chroma distance SA is determined using equation eq. 4 below: $\begin{matrix}Chroma distance SA = \sqrt{\left.{\left(xS-xA\right)}^{2}+{\left(yS-yA\right)}^{2}\right)} at constant \\ lightness Yc .\end{matrix}$

When C=I, OOG_CL = 0 (The OOG chroma level is minimum). When C=S, OOG_CL = 1 (the OOG chroma level is maximum).

Then the processor 510 determines a sum *SUM_OOG_CL* of the OOG chroma level of all pixels of the input image with an OOG color and determines the OOG chroma strength *OOG_CS* as follows: $OOG _ CS = \frac{SUM _ OOG _ CL}{OOG _ CN}$

Other methods such as histogram could be used to evaluate OOG Chroma Strength.

In a step 2215, the processor 510 determines the parameters of the dynamic color space conversion operator CSCO1 used in the dynamic color space conversion module CSC1 2100.

In a first embodiment of step 2215, the determination of the parameters of the dynamic color space conversion operator CSCO1 rely on a hue independent decision map.

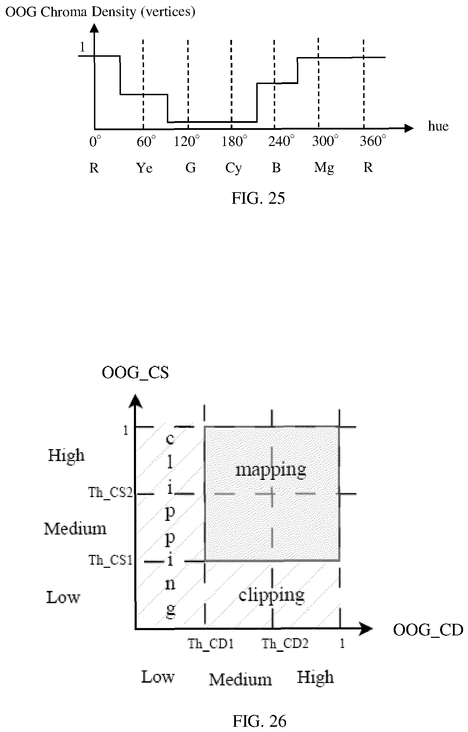

**FIG. 26** illustrates an example of a hue independent decision map depending on the OOG Chroma Density *OOG_CD* and on the OOG Chroma Strength *OOG_CS.* In this example, three ranges (Low, Medium, High values) defined for each parameter *OOG_CD* and *OOG_CS* allow obtaining a color space conversion operator CSCO1 corresponding to a gamut clipping or a gamut mapping.

The following conditions characterize these ranges:
- Cond_CD1: OOG-CD < Th_CD1
- Cond_CD2: OOG-CD > Th_CD2
- Cond_CS1: OOG-CS < Th_CS1
- Cond_CS2: OOG-CS > Th_CS2

Where *Th_CD1, Th_CD2, Th_CS1* and *Th_CS2* are values determined, for example, empirically.

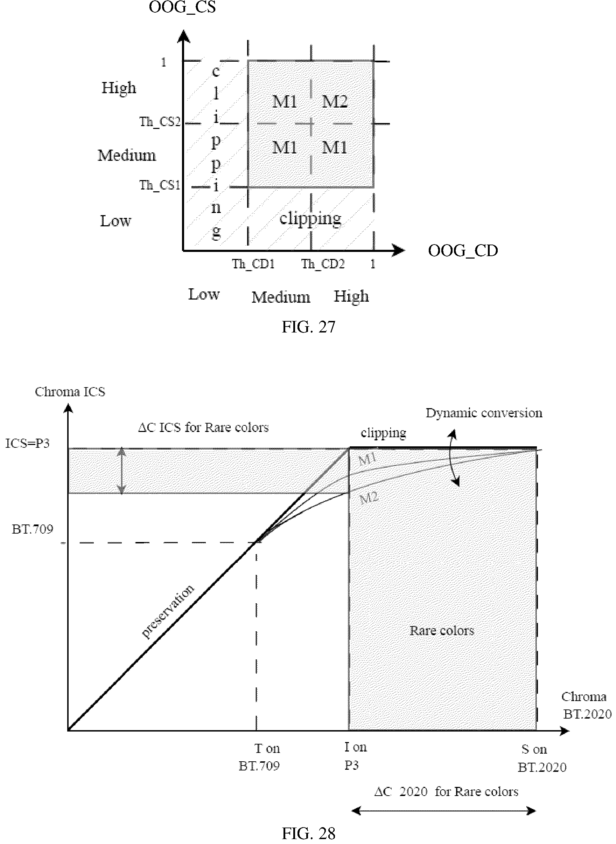

In a first variant of the first embodiment of step 2215, when the color space conversion mode is determined, a refinement can be done by applying different gamut mappings in the gamut mapping zone of the hue independent decision map. For instance, a gamut mapping *M2* may be applied for the images having "Strong Chroma Density" (*Cond_CD2*) and "Strong Chroma Strength" (*Cond_CS2*)*,* and a gamut mapping *M1* is applied otherwise, as shown in **FIG. 27****.** The gamut mapping *M2* and *M1* can rely on the compression equations of table TAB4 with parameters *a, b, c, s1* and *s2* adapted in function of an expected compression range. Table TAB5 provides examples of parameters *a, b, c, s1* and *s2* that can be used.

**Table TAB5**

| | s1 | a | b | c | s2 |
|---|---|---|---|---|---|
| clipping | 1 | 0 | 1 | 0 | 0 |
| M1 | 1 | -0.436 | 1.341 | -0.037 | 0.15 |
| M2 | 1 | -0.375 | 1.22 | -0.015 | 0.25 |

In a second variant of the first embodiment of step 2215, any other refinement of the hue independent decision map may be used. Other gamut mappings *Mx* may be derived from other conditions *Cond x.*

The first embodiment of step 2215 allows determining dynamically a hue independent dynamic color space conversion operator CSCO1 using the decision map. **FIG. 28** provide examples of color space conversion operator CSCO1 allowing to modulate per image "ΔC ICS for rare colors" also called *amount of chroma excursion.* In FIG. 28 the following color space conversion operators (illustrated by conversion curves (also called compression curves)) can be selected: gamut mapping *M1,* gamut mapping *M2* and gamut clipping. One can note that in FIG. 28 the hue independent dynamic mapping parameters are determined in the context of the first variant of the first embodiment of step 2215.

The parameters can be pre-calculated for these three functions by using the equations from table TAB4. The parameters are for example, the parameters of table TAB5.

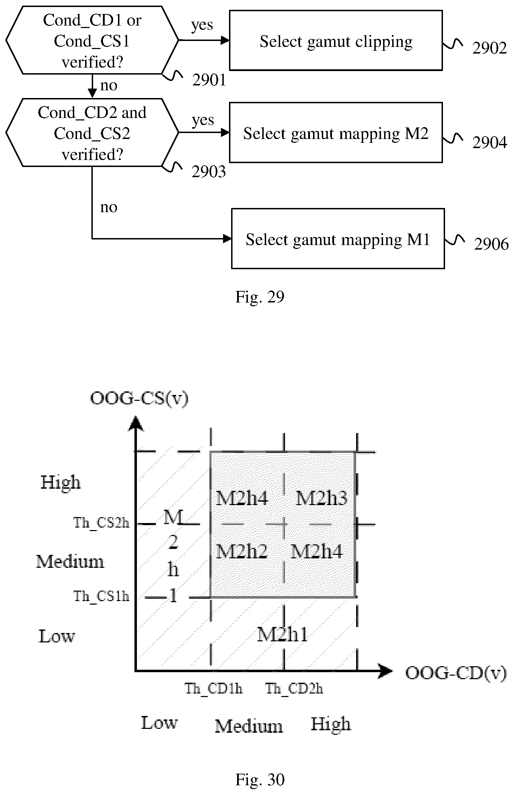

**FIG. 29** illustrates an example of process for selecting a color space conversion operator CSCO1 used in the color space conversion module CSC1 2100 between the gamut clipping, the gamut mapping *M1* and the gamut mapping *M2* in the context of the first variant of the first embodiment of step 2215.

In a step 2901, the processor 510 determines if the condition *Cond_CD1* or the condition *Cond_CS1* is verified. Responsive to one of the conditions *Cond _CD1* and *Cond_CS1* is verified, the processor 510 determines in a step 2902 that the color space conversion operator CSCO1 is the gamut clipping.

If none of condition *Cond_CD1* or condition *Cond_CS1* is verified, step 2901 is followed by a step 2903.

In step 2903, the processor 510 determines if both conditions *Cond_CD2* and condition *Cond_CS2* are verified. Responsive to both conditions *Cond_CD2* and *Cond CS2* are verified, the processor 510 determines in a step 2904 that the color space conversion operator CSCO1 is the gamut mapping M2.

Otherwise, the processor 510 determines that the color space conversion operator CSCO1 is the gamut mapping M1.

One can note that the color space conversion operator CSCO1 selected in step 2215 is applied in step 222.

In the process of Fig. 29, the process for selecting a color space conversion operator CSCO1 is independent of the hue and only the chrominance (or saturation) is corrected.

In a variant of the method of FIG. 22B, the determination of the parameters of the dynamic color space conversion operator CSCO1 rely on hue dependent OOG chroma density and hue dependent OOG chroma strength.

In this variant, for more precision, an optional step 2214 is inserted in the process of FIG. 22B, for example between steps 2213 and 2215, for evaluating for each vertex v a hue dependent OOG chroma density *OOG_CD(v)* and a hue dependent OOG chroma strength *OOG_CS (v)* along the hue dimension. This helps to select and apply different chroma compression curves in function of the hue of a pixel represented by the vertex v.

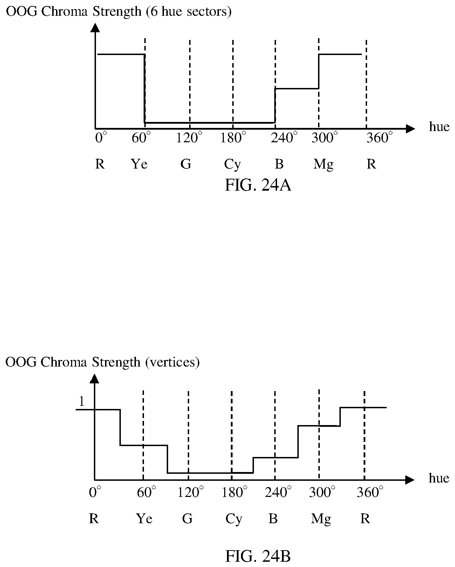

**FIG. 24A** shows an example of a hue dependent OOG chroma strength distribution calculated for the six hue sectors s that are defined by the three BT.2020 primary colors (R, G, B) and secondary colors (Ye, Cy, Mg). These primary and secondary colors correspond to the vertices v. Any other combination of hue sectors can be used.

A hue dependent OOG chroma strength *OOG_CS (s)* along a hue dimension and representing a percentage of pixels of the input image in a hue sector s having OOG color can be defined as follows: $OOG _ CS \left(s\right) = \frac{SUM _ OO G _ CL \left(s\right)}{OOG _ CN}$ where s represents one of the "6" hue sectors.

Some hue sectors having a high chroma strength can be refined to obtain more precision. For example, the hue sector [R,Ye] may be refined in "6" additional sub-sectors ss and re-apply the same equation as above to calculate chroma strength to each sub-sector. $OOG _ CS \left(s, ss\right) = \frac{SUM _ OO G _ CL \left(s, ss\right)}{OOG _ CN}$

The hue dependent chroma strength distribution above should be aligned on the "6" vertices (R, Ye, G, Cy, B, Mg) to better derive the mapping parameters. This can be done by averaging two adjacent sectors to obtain hue dependent OOG chroma strength *OOG_CS (v)* as follows: $OOG _ CS \left(v\right) = \frac{OO G _ CS \left(s\right) + OO G _ CS \left(s+1\right)}{2}$ where v is one of the "6" vertices.

**FIG. 24B** illustrates a result of an averaging of two adjacent sectors applied to the data of FIG. 24A.

The same operations are performed for the hue dependent OOG chroma density along the hue dimensions *OOG_CD(v).*

**FIG. 25** shows an example of the hue dependent OOG chroma density distribution calculated for the six hue vertices that are defined by the three BT.2020 primary colors (R, G, B) and secondary colors (Ye, Cy, Mg).

In the variant of the method of FIG. 22B, a secondary decision map allows selecting the color space conversion operator CSCO1 from the hue dependent OOG chroma density *OOG_CD(v)* and the hue dependent OOG chroma strength *OOG_CS(v).* The secondary decision map is determined for each vertex v in the list (R, Ye, G, Cy, B, Mg). In other words, six secondary decision maps are determined.

**FIG. 30** illustrates an example of one of the six secondary decision maps.

Each secondary decision map allows selecting the color space conversion operator CSCO1 from a set of mapping operators comprising *M2h1, M2h2, M2h3* and *M2h4.* The mapping operators *M2h1, M2h2, M2h3* and *M2h4* can rely on the compression equations of table TAB4 with parameters *a, b, c, s1* and *s2* adapted in function of an expected compression range.

The following four conditions characterize various areas in the secondary decision map:
- Cond_CD1h: OOG_CD(v) < Th_CD1h
- Cond_CD2h: OOG_CD(v) > Th_CD2h
- Cond_CS1h: OOG_CS(v) < Th_CS1h
- Cond_CS2h: OOG_CS(v) > Th_CS2h

Where *Th_CD1h, Th_CD2h, Th_CS1h* and *Th_CS2h* are values determined, for example, empirically.

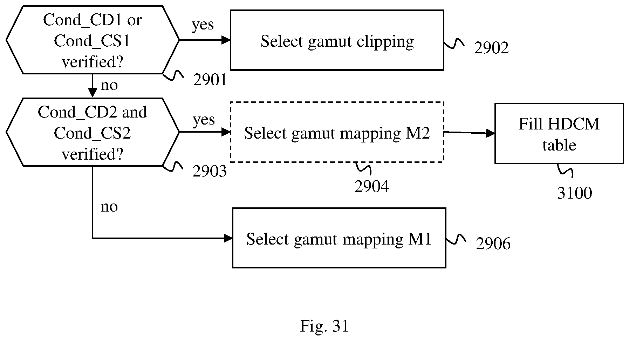

**FIG. 31** illustrates an example of process for selecting a color space conversion operator CSCO1 used in the color space conversion module 2100 according to the hue dependent variant of the method of FIG. 22B.

This selection process corresponds to a second embodiment of step 2215.

The selection process of FIG. 31 is identical to the selection process of FIG. 29 except in that step 2904 is replaced or followed by a step 3100.

While in the process of FIG. 29 only the chrominance (or the saturation) was corrected, with the process of FIG. 31, the hue is also corrected. The correction of the chrominance and the hue relies on an analysis the hue dependent OOG chroma density OOG_*CD(v)* and the hue dependent OOG chroma strength *OOG_CS(v)* for each vertex. The range of possible values of the hue dependent OOG chroma density *OOG_CD(v)* (respectively of the hue dependent OOG chroma strength *OOG_CS(v))* is divided in, for example, three sub-ranges (i.e., high, medium, low). Depending on which sub-ranges the hue dependent OOG chroma density *OOG_CD(v)* and the hue dependent OOG chroma strength *OOG*_*CS(v)* belongs to, a mapping function is selected between M2h1, M2h2, M2h3 and M2h4. Each mapping function M2h1, M2h2, M2h3 and M2h4 is associated to a level of correction of the chrominance (represented by the "ΔC ICS for rare colors") or of the hue (represented by a hue rotation). The level of correction is for example defined on three levels: Maxi, Half or Mini. In a first embodiment of the process of FIG. 31, step 3100 replaces step 2904.

During step 3100, based on the analysis the hue dependent OOG chroma density *OOG*_*CD(v)* and the hue dependent OOG chroma strength *OOG*_*CS(v)* for each vertex, the processor 510 fills a hue dependent color mapping (HDCM) table. An example of HDCM table is provided in table TAB6.

**Table TAB6**

| **Hue vertices (v)** | **OOG_CS(v)** | **OOG_CD(v)** | **M2hx** | **ΔH Hue excursion** | **ΔC ICS Chroma excursion** |
|---|---|---|---|---|---|
| **Red** | High | High | M2h3 | Maxi | Maxi |
| **Yellow** | Medium | Medium | M2h2 | Half | Half |
| **Green** | Low | Low | M2h1 | Mini | Mini |
| **Cyan** | Low | Low | M2h1 | Mini | Mini |
| **Blue** | Low | Medium | M2h1 | Mini | Mini |
| **Magenta** | Medium | High | M2h4 | Maxi | Half |

In Table TAB6, the column Δ*H hue excursion* allows determining a *hue rotation* (also called *hue excursion)* allowing rotating a vertex (v) of the BT.2020 color space toward a vertex (v) of the ICS color space. The hue rotation is maximum when the input vertex is aligned to the output vertex. The hue rotation is minimum when the input vertex is not rotated.

The column *chroma excursion* Δ*C ICS* corresponds to the amount (maxi, half, mini) of "ΔC ICS for rare colors" allocated for the rare input BT.2020 colors. For instance, the parameters of the compression curves of table TAB4 are adjusted to obtain the expected amount of "ΔC ICS for rare colors".

Other mappings *M2hx* could be derived from other combination of *OOG*_*CS(v)* and *OOG*_*CD(v).*

In the example of table TAB6, for the Red vertex, we have OOG_CS(Red)='High' and OOG_CD(Red)= 'High'. The gamut mapping M2h3 is selected as the color space conversion operator CSCO1 allowing "Maximum" hue rotation (or hue excursion) and "Maximum" chroma "ΔC ICS for rare colors" (or chroma excursion).

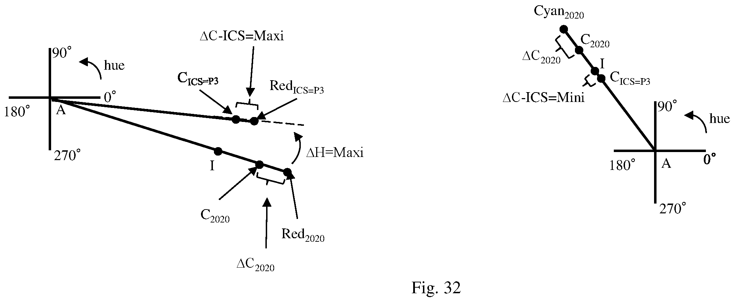

**FIG. 32** illustrates the Hue rotation and the Chroma "ΔC ICS for rare colors" for two colors on the projection in a 2D plan of the selected 3D color model (RGB, xyY, YUV,...). On the left side, the input vertex *Red*₂₀₂₀ is mapped to the output vertex RED_{ICS=P3}. The input color *C*₂₀₂₀ is mapped to the output color C_{ICS=P3} with maximum Hue (ΔH = maxi) and maximum Chroma "ΔC ICS for rare colors" (ΔC ICS for rare colors= maxi). On the right side, the input vertex *Cyan*₂₀₂₀ is mapped to I (intersection with P3 gamut boundary). The input color *C*₂₀₂₀ is mapped to the output color C_{ICS=P3} with minimum Hue "ΔC ICS for rare colors" (ΔH = 0°) and minimum Chroma "ΔC ICS for rare colors" (ΔC ICS for rare colors = mini).

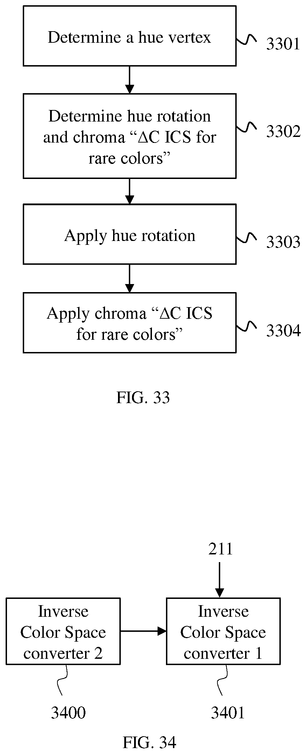

FIG. 33 illustrates the process applied during step 3100. The process of FIG. 33 is applied to each pixel (or at least to some of the OOG pixels) of the input image to determine a Hue rotation (i.e., a Hue excursion) and a chroma "ΔC ICS for rare colors" (i.e., a chroma excursion) to apply to the pixel. The combination of the hue rotation and of the chroma "ΔC ICS for rare colors" defines the color space conversion operator CSCO1.

In a step 3301, the processor 510 determines a hue vertex of a pixel.

In a step 3302, the processor 510 uses the hue dependent OOG chroma density *OOG_CD(v),* the hue dependent OOG chroma strength *OOG_CS(v)* and the hue vertex of the pixel to select from a HDCM (as illustrated for example in table TAB6) a hue rotation and a chroma "ΔC ICS for rare colors" (i.e., a compression curve allowing obtaining the chroma "ΔC ICS for rare colors") to be applied to the pixel.

In a step 3303, the processor 510 applies the selected hue rotation to the pixel.

In a step 3304, the processor 510 applies the selected chroma "ΔC ICS for rare colors" (i.e., the selected compression curve allowing obtaining the chroma "ΔC ICS for rare colors") to the pixel.

The hue dependent process of FIG. 31 is more complex than the hue independent process of FIG. 29 which may be an issue for devices with low computation capabilities.

In an embodiment, a choice between the process of FIG. 29 and the process of FIG. 31 is done in function of the computation capabilities of the device applying the color space conversion.

In an embodiment, the process of FIG. 31 comprises the step 2904. In that case, step 2904 is applied systematically. Step 3100 is then applied optionally if a time remaining for applying the color space conversion is sufficient. If the time is sufficient, the color space conversion operator CSCO1 selected in step 3100 replaces the color space conversion operator CSCO1 selected in step 2904. Otherwise, the process of FIG. 31 stops at step 2904.

In an embodiment, to preserve consistency within a video sequence between two scene-cuts, different temporal strategies can be used.

In a first strategy, at each image representing a scene-cut, the image is analyzed (in step 221) and the color space conversion operator CSCO1 is determined based on the analysis. The so determined color space conversion operator CSCO1 is then used for the duration of the whole video sequence, until a detection of a new scene-cut.

In a second strategy, if the analysis of the full video can be done prior to conversion (for instance in a non-live scenario), all images of the video are analyzed and a color space conversion operator CSCO1 is determined for each image.

During step 223, a color space conversion operator CSCO2 performs the conversion from the ICS(=P3) color space to the CT.709 color space. The color space conversion operator CSCO2 corresponds to the one described in SL-HDR1 for the configuration 2. An implementation of the color space conversion operator CSCO2 may be found in section D.3 of SL-HDR1.

Table TAB2 can be simplified as in table TAB7. As can be seen configurations "2" and "3" can be merged and in this merged configuration, the color space conversion operator CSCO2 requires only one 3D-LUT instead of 2 when configurations "2" and "3" were independent.

**Table TAB7**

| | HDR signaling (ANC) | | Color Space Conversion (CSC) | |
|---|---|---|---|---|
| | HDRColorSpace (SMPTE ST-425-5) | HDRDisplay Gamut (SMPTE ST-2086) | Pre-mapping (CSC1) | Post-mapping (CSC2) |
| Configuration 1 SL-HDR1 v1 | BT.2020 | BT.2020 or P3 or BT.709 | BT.2020 to BT.709 Matrix + clipping | bypass |
| Configuration 2 SL-HDR1 v2 | BT.2020 | P3 | BT.2020 to P3 Matrix + clipping in static mode | P3 to BT.709 Gamut mapping |
| Configuration 3 SL-HDR1 v2 | BT.2020 | BT.2020 | BT.2020 to ICS (=P3) in dynamic mode | ICS(=P3) to BT.709 Gamut mapping |

Regarding the home terminal, the various embodiments described in relation to the color space conversion module 101 of the pre-processor 10 imply a modification of the inverse color space conversion module 151 of the post-processor.

**FIG. 34** illustrates a modified inverse color space conversion module according to an embodiment. As the color space conversion module 210 detailed in FIG. 21B, the inverse color space conversion module of FIG. 34 comprises two sub-modules: an inverse color space conversion module ICSC2 3400 and an inverse color space conversion module ICSC1 3401. The inverse color space conversion module ICSC1 3401 applies a dynamic inverse color space conversion operator ICSCO1. The inverse color space conversion module ICSC2 3400 applies a static inverse color space conversion operator ICSCO2.

In order to determine the dynamic inverse color space conversion operator ICSCO1, the inverse color space conversion module ICSC1 3400 receives gamut mapping (GM) metadata from the production system.

In case of use of a hue independent dynamic color space conversion operator CSCO1, the GM metadata comprises information representing the hue independent color space conversion operator CSCO1 selected by the picture analysis module 211 in step 221.

In case of use of a hue dependent dynamic color space conversion operator CSCO1, the GM metadata comprises the HDCM table. The hue dependent dynamic inverse color space conversion operator ICSCO1 is composed of an inverse hue rotation and an inverse of the compression curve allowing obtaining the chroma "ΔC ICS for rare colors". The GM metadata allow obtaining this inverse hue rotation and this inverse compression curve.

No metadata is transmitted for determining the inverse color space conversion operator ICSCO2 since this operator is static. The inverse color space conversion operator ICSCO2 inverse the operation performed by the color space conversion operator CSCO2.

The GM metadata may be transported in Gamut mapping variables defined in section 6.3.9 of SL-HDR1 (ETSI TS 103 433-1 V1.4.1 version 2021-08).

Until now, the BT.2020 color space has been considered for the largest (i.e., input) color space, P3 has been considered for the intermediate color space (ICS) and BT.709 had been considered for the narrowest (output) color space. Other color spaces are possible. For instance, the Academy Color Encoding System (ACES) specifies a color management workflow that is characterized by an input color space such as ALEXA ARRI camera gamut, an intermediate color space such as AP1 and an output color space such as P3.

One or more embodiments provide a computer program comprising instructions which when executed by one or more processors cause such processors to perform the methods according to any of the embodiments described above. One or more embodiments also provide a computer readable storage medium having stored thereon instructions for implementing the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the method for modifying video sequences based on a second reference level described above may be implemented as one or more modules and modified according to the various embodiments of the present disclosure.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

We described above a number of embodiments. Features of these embodiments can be provided alone or in any combination. Further, embodiments can include one or more of the following features, devices, or aspects, alone or in any combination, across various claim categories and types:
- A TV, set-top box, cell phone, tablet, personal computer or other electronic device that performs at least one of the embodiments described, and that displays (e.g. using a monitor, screen, or other type of display) a resulting image.
- A TV, set-top box, cell phone, tablet, personal computer or other electronic device that tunes (e.g. using a tuner) a channel to receive a signal including a reconstructed video content, and performs at least one of the embodiments described.
- A TV, set-top box, cell phone, tablet, or other electronic device that receives (e.g. using an antenna) a signal over the air that includes a reconstructed video content, and performs at least one of the embodiments described.

## Claims

1. A method of mapping an input image in an input color space into an output image in an output color space, the input color space being larger than the output color space, the method comprising:
obtaining (220) an intermediate color space, the input color space being larger than the intermediate color space, the intermediate color space being larger than the output color space;
obtaining (221) a dynamic color space conversion operator from an analysis of the input image;
applying (222) a first mapping to the input image to obtain an intermediate image in the intermediate color space using the dynamic color space conversion operator; and,
applying (223) a second mapping to the intermediate image to obtain the output image applying a static color space conversion operator.

2. The method of claim 1 wherein the analysis of the input image comprises
detecting (2211) pixels of the input image having an out of gamut (OOG) color, an OOG color corresponding to a color of the input color space that cannot be represented in the intermediate color space;
determining (2212) at least one OOG chroma density corresponding to a percentage of pixels of the input image having a OOG color;
determining (2213) at least one OOG chroma strength corresponding to a mean of chroma levels of pixels of the input image having a OOG color; and,
determining the dynamic color space conversion operator from the at least one OOG chroma density and the at least one OOG chroma strength.

3. The method of claim 1 or 2 wherein the obtaining of the dynamic color space conversion operator from the at least one OOG chroma density and the at least one OOG chroma strength allows selecting the dynamic color space conversion operator in a set comprising a gamut clipping and at least one gamut mapping, each gamut mapping being different.

4. The method of claim 2 or 3 wherein the obtaining of the dynamic color space conversion operator from the at least one OOG chroma density and the at least one OOG chroma strength comprises comparing the at least one OOG chroma density with a first value and comparing the at least one OOG chroma strength with a second value.

5. The method of any previous claim from claim 2 to 4 wherein a single OOG chroma density and a single OOG chroma strength are determined and the single OOG chroma density and the single OOG chroma strength are independent of a hue.

6. The method of any previous claim from claim 2 to 4 wherein a OOG chroma strength and a OOG chroma density are determined at least for each hue vertex of the input color space.

7. The method of claim 6 wherein, for at least one pixel of the input image having an OOG color, the dynamic color space conversion operator is determined based on OOG chroma strength and a OOG chroma density depending on a hue vertex of the pixel.

8. The method of any previous claims wherein metadata representative of the dynamic color space conversion operator are transmitted along with the output image.

9. The method of claim 8 wherein a reconstructed version of the input image is obtained by applying on a reconstructed version of the output image an inverse static color space conversion operator inverting the second mapping to obtain an intermediate reconstructed image and an inverse dynamic color space conversion operator inverting the first mapping determined based on the metadata representative of the dynamic color space conversion operator.

10. A device for mapping an input image in an input color space into an output image in an output color space, the input color space being larger than the output color space, the device comprising electronic circuitry configured for:
obtaining (220) an intermediate color space, the input color space being larger than the intermediate color space, the intermediate color space being larger than the output color space;
obtaining (221) a dynamic color space conversion operator from an analysis of the input image;
applying (222) a first mapping to the input image to obtain an intermediate image in the intermediate color space using the dynamic color space conversion operator; and,
applying (223) a second mapping to the intermediate image to obtain the output image applying a static color space conversion operator.

11. The device of claim 10 wherein the analysis of the input image comprises
detecting (2211) pixels of the input image having an out of gamut (OOG) color, an OOG color corresponding to a color of the input color space that cannot be represented in the intermediate color space;
determining (2212) at least one OOG chroma density corresponding to a percentage of pixels of the input image having a OOG color;
determining (2213) at least one OOG chroma strength corresponding to a mean of chroma levels of pixels of the input image having a OOG color; and,
determining the dynamic color space conversion operator from the at least one OOG chroma density and the at least one OOG chroma strength.

12. The device of claim 10 or 11 wherein the obtaining of the dynamic color space conversion operator from the at least one OOG chroma density and the at least one OOG chroma strength allows selecting the dynamic color space conversion operator in a set comprising a gamut clipping and at least one gamut mapping, each gamut mapping being different.

13. The device of claim 11 or 12 wherein the obtaining of the dynamic color space conversion operator from the at least one OOG chroma density and the at least one OOG chroma strength comprises comparing the at least one OOG chroma density with a first value and comparing the at least one OOG chroma strength with a second value.
The device of any previous claim from claim 11 to 13 wherein a single OOG chroma density and a single OOG chroma strength are determined and the single OOG chroma density and the single OOG chroma strength are independent of a hue.

14. The device of any previous claim from claim 11 to 13 wherein a OOG chroma strength and a OOG chroma density are determined at least for each hue vertex of the input color space.

15. The device of claim 14 wherein, for at least one pixel of the input image having an OOG color, the dynamic color space conversion operator is determined based on OOG chroma strength and a OOG chroma density depending on a hue vertex of the pixel.
